Europäisches Patentamt

European Patent Office

Office européen des brevets

(11) Veröffentlichungsnummer: **0 274 384 B1**

(12) **EUROPÄISCHE PATENTSCHRIFT**

(45) Veröffentlichungstag der Patentschrift: **22.04.92**

(21) Anmeldenummer: **88100083.0**

(22) Anmeldetag: **06.01.88**

(51) Int. Cl.⁵: **B60H 3/00**, B60R 16/02

(54) **Einrichtung zur Elektroklimatisierung des Innenraumes eines Kraftfahrzeuges.**

(30) Priorität: **08.01.87 DE 3700362**

(43) Veröffentlichungstag der Anmeldung:
**13.07.88 Patentblatt 88/28**

(45) Bekanntmachung des Hinweises auf die
Patenterteilung:
**22.04.92 Patentblatt 92/17**

(84) Benannte Vertragsstaaten:
**AT DE ES FR IT NL SE**

(56) Entgegenhaltungen:
**DE-A- 1 630 112**
**DE-U- 8 109 669**
**DE-U- 8 700 325**
**FR-A- 2 073 841**

(73) Patentinhaber: **Haufe, Paul J.M.**
**Südring 10**
**W-8878 Bibertal-Anhofen(DE)**

(72) Erfinder: **Haufe, Paul J.M.**
**Südring 10**
**W-8878 Bibertal-Anhofen(DE)**

(74) Vertreter: **Dreiss, Hosenthien & Fuhlendorf**
**Gerokstrasse 6**
**W-7000 Stuttgart 1(DE)**

EP 0 274 384 B1

## Beschreibung

Die Erfindung betrifft eine Einrichtung zur Elektroklimatisierung des Innenraumes eines Kraftfahrzeuges, welches umfaßt:

(a)
eine elektrisch auf Massepotential liegende Karosserie mit indestens zwei einander ungefähr gegenüberliegenden Fensterscheiben;

(b)
mindestens einen im Innenraum angeordneten mit dem elektrischen Massepotential verbunden Gegenstand, mit welchem die Fahrzeuginsassen regelmäßig und dauerhaft in Berührung kommen;

(c)
ein Belüftungssystem mit mindestens einem Frischluft-Ansaugkanal, mit mindestens einem Frischluft-Einlaßkanal und mit mindestens einem zwischen diesen Kanälen angeordneten Gebläse;

(d)
einen ersten Hochspannungsgenerator, dessen Ausgangsspannung im Innenraum des Kraftfahrzeugs ein elektrisches Feld erzeugt, wobei die Frontscheibe und vorzugsweise die Heckscheibe mit dem Hochspannungsgenerator zusammenwirken;

(e)
einen im Frischluft-Einlaßkanal angeordneten Ionengenerator;

(f)
einen zweiten Hochspannungsgenerator, dessen Ausgangsspannung an den Ionengenerator gelegt ist.

Eine eingangs beschriebene Einrichtung zur Elektroklimatisierung des Innenraumes von Kraftfahrzeugen ist aus der FR-A-2 073 841 bekannt. Die tatsächlichen Verhältnisse im Innenraum werden hier nicht erfaßt, so daß keine befriedigende Elektroklimatisierung erreicht wird.

**Aufgabe** der vorliegenden Erfindung ist es, eine Einrichtung der eingangs genannten Art so zu verbessern, daß im Innenraum eines Kraftfahrzeuges die zur Aufrechterhaltung von Gesundheit und Wohlbefinden erforderlichen elektroklimatischen Verhältnisse erreicht und erhalten werden.

Diese Aufgabe wird bei einer Einrichtung der eingangs genannten Art dadurch gelöst, daß im Innenraum des Kraftfahrzeugs ein Sensor angeordnet ist, der den dort herrschenden Ist-Wert des elektrischen Feldes mißt und ein hierfür repräsentatives Signal erzeugt; daß das Signal des Sensors dem ersten Hochspannungsgenerator zugeführt wird und dort mit einem Soll-Wert verglichen wird, wobei bei einer Differenz zwischen dem Ist-Wert und dem Soll-Wert die Ausgangsspannung des ersten Hochspannungsgenerators nachgeregelt wird, bis im Innenraum des Kraftfahrzeugs der Soll-Wert des elektrischen Feldes erreicht ist.

Die erfindungsgemäße Elektroklimatisierung des Innenraumes eines Kraftfahrzeuges beruht also auf der kombinierten Wirkung von künstlich erzeugten Ionen, die mit der Frischluft in den Innenraum des Kraftfahrzeuges geführt werden und der Wirkung eines elektrischen Feldes. Letzeres hat sowohl einen unmittelbaren Einfluß auf die Gesundheit und das Wohlbefinden der Fahrzeuginsassen als auch eine Wirkung auf die im Ionengenerator erzeugten Luftionen, die ohne dieses elektrsiche Feld nur eine geringe Reichweite hätten.

In bestimmten Ausnahmefällen kann es auch erforderlich werden, daß die einander ungefähr gegenüberliegenden Fensterscheiben mit einer elektrisch leitenden, durchsichtigen Schicht überzogen sind. Im allgemeinen läßt sich die "Antennenwirkung" jedoch auch mit normalen Scheiben erzielen.

Wenn die einander gegenüberliegenden Fensterschieben die Frontscheibe und die Heckscheibe sind, verlaufen die Feldlinien im wesentlichen parallel zur Längsachse des Autos. Dies ist für den Ionentrasport besonders wichtig, wenn, wie im Regelfall, der Frischlufteintritt hauptsächlich an der vorderen Querseite des Fahrzeug-Innenraumes erfolgt.

Der Gegenstand, mit dem die Fahrzeuginsassen regelmäßig und dauerhaft in Berührung kommen, sollte zumindest an seiner äußersten Schicht eine elektrische Leitfähigkeit aufweisen. Hierdurch wird die Ableitung von Spannungen von den Fahrzeuginsassen zum Massepotential der Karosserie hin erleichtert.

Bei dem Gegenstand, mit welchem die Fahrzeuginsassen regelmäßig und dauerhaft in Berührung kommen, kann es sich um das Lenkrad, einen Sitz, einen Sicherheitsgurt oder dergleichen handeln.

In gewissen Fällen ist es auch möglich, daß nur ein Hochspannungsgenerator vorgesehen ist, dessen Ausgangsspannung sowohl an die beiden Fensterscheiben gelegt wird als auch den Ionengenerator betreibt.

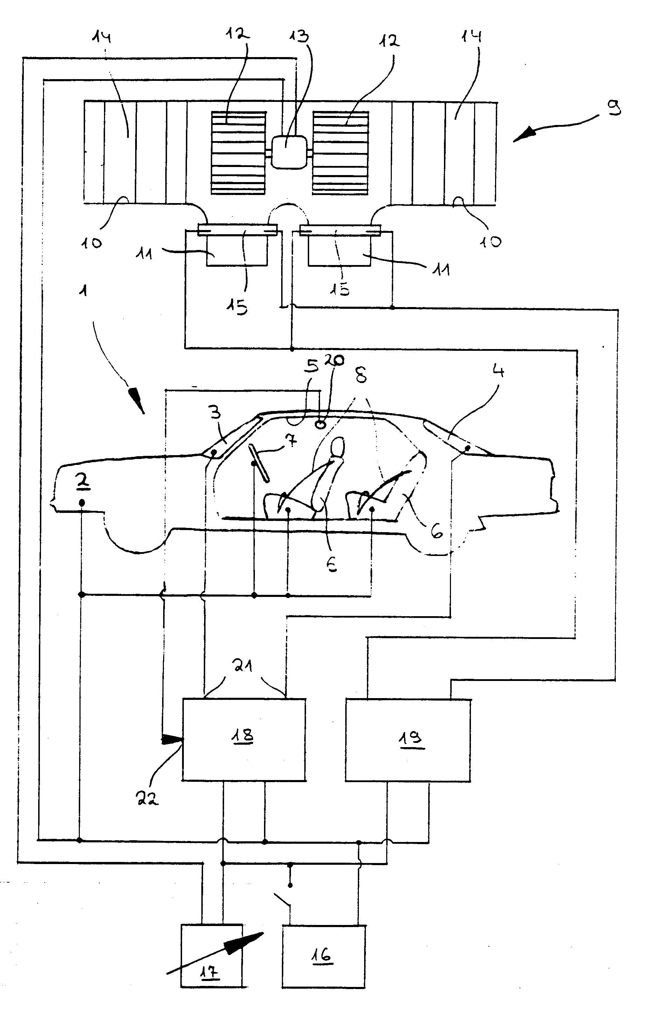

Ein Ausführungsbeispiel der Erfindung wird nachfolgend anhand der Zeichnung näher erläutert; die einzige Figur zeigt schematisch eine Einrichtung zur Elektroklimatisierung des Innenraumes eines Kraftfahrzeuges.

Im mittleren Bereich der Figur ist schematisch ein Kraftfahrzeug 1 dargestellt. Es umfaßt eine Karosserie 2, die regelmäßig die elektrische Masse des bordeigenen Elektrosystems darstellt. In die Karosserie 2 sind eine Frontscheibe 3 und eine Heckscheibe 4 eingesetzt. Im Innenraum 5 des Kraftfahrzeuges 1 befinden sich verschiedene Gegenstände, mit denen die Fahrzeuginsassen regelmäßig und dauerhaft in Berührung kommen. Dazu zählen insbesondere die Sitze 6, das Lenkrad 7 sowie die Sicherheitsgurte 8.

Im oberen Bereich der Figur ist schematisch das Belüftungssystem 9 für den Innenraum 5 des Kraftfahrzeuges 1 gezeigt. Dieses ist für die linke und rechte Kraftfahrzeughälfte symmetrisch aufgebaut und umfaßt dort jeweils einen Frischluft-Ansaugkanal 10, einen Frischluft-Einlaßkanal 11 und, zwischen die Kanäle 10 und 11 geschaltet, einen Radialgebläserotor 12. Die beiden Radialgebläserotoren 12 werden von einem gemeinsamen Elektromotor 13 angetrieben.

In den Frischluft-Ansaugkanälen 10 des Belüftungssystems 9 befinden sich verschiedene, hier im einzelnen nicht interessierende Filterstufen 14. In den beiden Frischluft-Einlaßkanälen 11 ist jeweils ein Ionengenerator 15 bekannter Bauart eingesetzt, welcher in dem ihn durchsetzenden Luftstrom durch eine Koronaentladung positive und/oder negative Ionen erzeugt. Über die Ionenkonzentration gibt ebenfalls die eingangs genannte Literaturstelle "Biologische Wirkungen von Luftionen" Auskunft.

Die elektrische Schaltungsanordnung, deren Komponenten hauptsächlich im unteren Bereich der Figur dargestellt sind, umfaßt die bordeigene Batterie 16 und - von dieser über einen Schalter 18 gespeist - einen Regler 17 für den Elektromotor 13, einen ersten Hochspannungsgenerator 18, einen zweiten Hochspannungsgenerator 19 sowie einen im Innenraum 5 des Kraftfahrzeugs 1 angeordneten Sensor 20. Alle Komponenten der elektrischen Schaltung sind für sich bekannt und brauchen als solche hier nicht näher beschrieben zu werden. Es genügt, ihre Funktion im vorliegenden Zusammenhang zu erläutern.

Der Regler 17 dient in üblicher Weise der Einstellung der Drehzahl des Elektromotors 13 und somit der Gebläseleistung.

Der erste Hochspannungsgenerator 18 erzeugt an seinem hochohmigen, berührungssicheren Ausgang 21 eine Gleichspannung, deren Größe zwischen etwa 1 und etwa 18 kV in noch zu beschreibender Weise regelbar ist. Der Ausgang 21 ist elektrisch mit zwei gegenüberliegenden Fensterscheiben des Kraftfahrzeuges 1, im dargestellten Ausführungsbeispiel mit der Frontscheibe 3 und der Heckscheibe 4, verbunden. Die Fensterscheiben 3, 4 sind hierzu in üblicher Weise kontaktiert; eine besondere, elektrisch leitende Beschichtung der Fensterscheiben 3, 4 kann durch Aufdampfen erfolgen; sie ist jedoch in der Regel entbehrlich.

Durch die Wirkung der als "Antennen" geschalteten Fensterscheiben 3, 4 entsteht im Innenraum 5 des Kraftfahrzeuges 1 ein elektrisches Feld, dessen Größe vom Sensor 20 überwacht wird. Das Signal des Sensors 20 wird einem Regeleingang 22 des ersten Hochspannungsgenerators 18 zugeführt. Dort wird der durch den Sensor 20 gemessene Ist-Wert des elektrischen Feldes mit einem Soll-Wert verglichen, bei welchem nach empirischen, auch medizinisch gesicherten Ergebnissen das größte Wohlbefinden der Kraftfahrzeuginsassen erzielt wird.

Die Ausgangsspannung des zweiten Hochspannungsgenerators 19 liegt an den beiden Ionengeneratoren 15 an und sorgt dort für die Aufrechterhaltung einer Korona-Entladung. Die hier erzeugten Ionen gelangen mit der Frischluft in den Innenraum 5 des Kraftfahrzeuges 1 und werden von dem dort herrschenden elektrischen Feld erfaßt. Ohne dieses elektrische Feld hätten die Ionen hinter ihrer Erzeugungsstelle nur eine sehr geringe Reichweite. Unter dem Einfluß des elektrischen Feldes werden sie jedoch in den gesamten Innenraum 5 des Kraftfahrzeuges 1 transportiert, wo sie ihre gesundheitlichen Wirkungen auf die Fahrzeuginsassen entfalten können.

Zur Aufrechterhaltung eines von Ionen getragenen Stromflusses und zur Vermeidung von Aufladungseffekten ist es erforderlich, daß sich die Fahrzeuginsassen auf elektrischem Massepotential befinden. Um dies zu erreichen, sind die Sitze 6, das Lenkrad 7 und die Sicherheitsgurte 8, also die Gegenstände, die von den Fahrzeuginsassen regelmäßig und dauerhaft berührt werden, auf Massepotential gelegt. Die Außenhaut dieser Gegenstände ist dabei so ausgestaltet, daß sie eine gewisse elektrische Leitfähigkeit besitzt.

Bei einem in der Zeichnung nicht dargestellten Ausführungsbeispiel ist nur ein Hochspannungsgenerator vorgesehen, von dem sowohl die zur Erzeugung des elektrischen Feldes als auch die zum Betrieb der Ionengeneratoren erforderliche Spannung bereitgestellt wird.

## Patentansprüche

1. Einrichtung zur Elektroklimatisierung des Innenraumes (5) eines Kraftfahrzeuges (1), welches umfaßt:

a) eine elektrisch auf Massepotential liegende Karosserie mit mindestens zwei einander ungefähr gegenüberliegenden Fensterscheiben (3,4);

b) mindestens einen im Innenraum (5) angeordneten mit dem elektrischen Massepotential verbundenen Gegenstand (6,7,8), mit welchem die Fahrzeuginsassen regelmäßig und dauerhaft in Berührung kommen;

c) ein Belüftungssystem mit mindestens einem Frischluft-Ansaugkanal (10), mit mindestens einem Frischluft-Einlaßkanal (11) und mit mindestens einem zwischen diesen Kanälen (10,11) angeordneten Gebläse (12);

d) einen ersten Kochspannungsgenerator (18), dessen Ausgangsspannung im Innenraum (5) des Kraftfahrzeugs (1) ein elektrisches Feld erzeugt, wobei die Frontscheibe (3) und vorzugsweise die Heckscheibe (4) mit dem Hochspannungsgenerator (18) zusammenwirken;

e) einen im Frischluft-Einlaßkanal (11) angeordneten Ionengenerator (15);

f) einen zweiten Hochspannungsgenerator (19), dessen Ausgangsspannung an den Ionengenerator (15) gelegt ist;

**dadurch gekennzeichnet,** daß

im Innenraum (5) des Kraftfahrzeugs (1) ein Sensor (20) angeordnet ist, der den dort herrschenden Ist-Wert des elektrischen Feldes mißt und ein hierfür repräsentatives Signal erzeugt;

daß das Signal des Sensors (20) dem ersten Hochspannungsgenerator (18) zugeführt wird und dort mit einem Soll-Wert verglichen wird, wobei bei einer Differenz zwischen dem Ist-Wert und dem Soll-Wert die Ausgangsspannung des ersten Hochspannungsgenerators (18) nachgeregelt wird, bis im Innenraum (5) des Kraftfahrzeugs (1) der Soll-Wert des elektrischen Feldes erreicht ist.

2. Einrichtung nach Anspruch 1, dadurch gekennzeichnet, daß die Frontscheibe (3) und die ungefähr gegenüberliegende Fensterscheibe (Heckscheibe 4) mit einer elektrisch leitenden durchsichtigen Schicht überzogen sind.

3. Einrichtung nach Anspruch 1 oder 2, dadurch gekennzeichnet, daß der Gegenstand (6,7,8), mit welchem die Fahrzeuginsassen regelmäßig und dauerhaft in Berührung kommen, zumindest an seiner äußeren Schicht eine elektrische Leitfähigkeit aufweist.

4. Einrichtung nach einem der Ansprüche 1 bis 3, dadurch gekennzeichnet, daß der Gegenstand (6,7,8), mit dem die Fahrzeuginsassen regelmäßig und dauerhaft in Berührung kommen, das Lenkread (7) und/oder ein Sitz (6) und/oder ein Sicherheitsgurt (8) ist.

5. Einrichtung nach einem der vorhergehenden Ansprüche, dadurch gekennzeichnet, daß nur ein Hochspannungsgenerator vorgesehen ist, dessen Ausgangsspannung sowohl an die beiden Fensterscheiben (3,4) gelegt ist als auch den Ionengenerator betreibt.

**Claims**

1. Device for electrostatic air conditioning of a motor vehicle compartment (5), including:

a) an automobile body connected electrically to ground potential with at least two window panes (3,4) approximate opposed to each other;

b) at least one object (6,7,8) arranged in the vehicle compartment and connected electrically to the ground potential and with which the vehicle occupants are in touch regularly and permanenty;

c) a ventilation system with at least one intake port (11) for fresh air and with at least one ventilator (12) arranged between the two ports (10,11);

d) a first high voltage generator (18), the output voltage of which generates an electrostatic field in the compartment (5) of the vehicle (1), the windshield (3) and preferably the rear window (4) interact with the high voltage generator (18);

e) an ion generator (15) arranged in the inlet port (11) for fresh air;

f) a second high voltage generator (19), the output voltage of which is applied to the ion generator (15);

**characterized in that**

a sensor (20) is arranged in the compartment (5) of the vehicle (1), measuring the actual value of the electrostatic field and creating a signal representing this value;

that the signal created by the sensor (20) is fed to the first high voltage generator (18) and is there compared with a desired value, and the output voltage of the first high voltage generator (18) is readjusted until the desired value of the electrostatic field in the compartment (5) of the vehicle (1) is achieved if a difference between the actual value and the desired value occurs.

2. Device according to claims 1, wherein the windshield (3) and the windowpane (rear window 4) arranged approximately on the opposite side are coated with an electrically conductive and transparent layer.

3. Device according to claim 1 or 2, wherein the object (6,7,8) with which the vehicle occupants are in touch regularly and permanently has an electrical conductance at least on its outer layer.

4. Device according to one of claims 1 to 3, wherein the object (6,7,8) with which the vehicle occupants are in touch regularly and permanently is the steering wheel (7), and/or a seat (6) and/or a safety belt (8).

**5.** Device according to one of the preceeding claims, wherein only one single high voltage generator is provided which output voltage is applied to both of the two windowpanes (3,4) and operates the ion generator as well.

**Revendications**

**1.** Dispositif d'électroclimatisation de l'habitacle (5) d'un véhicule automobile (1), comprenant :

a) une carrosserie, placée électriquement au potentiel de masse, avec au moins deux vitres de fenêtre (3,4) placées à peu près l'une en face de l'autre;

b) au moins un objet (6,7,8), disposé dans l'habitacle (5) et relié électriquement au potentiel de masse, avec lequel les passagers viennent régulièrement et durablement en contact;

c) un système de ventilation, avec au moins un canal d'aspiration d'air neuf (10), avec au moins un canal d'admission d'air neuf (11) et avec au moins un ventilateur (12), disposé entre ces canaux (10,11);

d) un premier générateur à haute tension (18), dont la tension de sortie produit, dans l'habitacle (5) du véhicule automobile (1), un champ électrique, la vitre avant (3) et, de préférence, la vitre arrière (4) coopérant avec le générateur de haute tension (18);

e) un générateur d'ions (15), disposé dans le canal d'admission d'air neuf (11);

f) un deuxième générateur à haute tension (19), dont la tension de sortie est appliquée au générateur d'ions (15);

caractérisé en ce que

dans l'habitacle (5) du véhicule automobile (1) est disposé un capteur qui mesure la valeur réelle du champ électrique dans l'habitacle et produit un signal représentatif de celle-ci; que le signal du capteur (20) est amené au premier générateur à haute tension (18) et y est comparé à une valeur de consigne, où, en cas d'existence d'une différence entre la valeur réelle et la valeur de consigne, la tension de sortie du premier générateur à haute tension (18) fait l'objet d'un réglage d'ajustement, jusqu'à ce que l'on obtienne dans l'habitacle (5) du véhicule automobile (1) la valeur de consigne du champ électrique.

**2.** Dispositif selon la revendication 1, caractérisé en ce que la vitre avant (3) et la vitre de fenêtre (vitre arrière 4) placée à peu près en face sont recouvertes d'une couche translucide conductrice de l'électricité.

**3.** Dispositif selon la revendication 1 ou 2, caractérisé en ce que l'objet (6,7,8) avec lequel les passagers sont régulièrement et durablement en contact présente une conductiblité électrique, au moins sur sa couche extérieure.

**4.** Dispositif selon l'une des revendications 1 à 3, caractérisé en ce que l'objet (6,7,8), avec lequel les passagers sont régulièrement et durablement en contact, est le volant (7) et/ou un siège (6) et/ou une ceinture de sécurité (8).

**5.** Dispositif selon l'une des revendications précédentes, caractérisé en ce qu'il n'est prévu qu'un seul générateur à haute tension, dont la tension de sortie est appliquée aux deux vitres de fenêtre (3,4) et agit également dans le générateur d'ions.